# EUROPÄISCHE PATENTSCHRIFT

(11) **EP 2 218 931 B1**
(45) Veröffentlichungstag und Bekanntmachung des Hinweises auf die Patenterteilung: **24.04.2013**
(21) Anmeldenummer: 10152490.8
(22) Anmeldetag: 03.02.2010
(51) Int. Cl.: F16D 13/75

(54) **Druckplattenbaugruppe für eine Reibungskupplung**
Pressure plate component for a friction clutch
Composant de plateau de pression pour un embrayage à friction

(30) Priorität: 09.02.2009 DE 102009000705
(43) Veröffentlichungstag der Anmeldung: 18.08.2010
(73) Patentinhaber: ZF Friedrichshafen AG, 88038 Friedrichshafen (DE)
(72) Erfinder: Orlamünder, Andreas, 97453, Schonungen (DE); Hein, Gerhard, 97708, Bad Bocklet (DE); Knauer, Wolfgang, 97486, Königsberg (DE); Kühner, Michael, 97523, Schwanfeld (DE); Linz, Bernhard, 96149, Breitengüßbach (DE); Röll, Gerhard, 97499, Donnersdorf (DE); Seemann, Klaus, 97440, Zeuzleben (DE); Vogt, Sebastian, 97616, Bad Neustadt (DE); Weidinger, Reinhold, 97509, Kolitzheim (DE)

(56) Entgegenhaltungen:
- WO-A1-2009/080543
- DE-A1- 19 910 858
- US-A- 5 758 756
- US-B1- 6 394 251

## Beschreibung

Die vorliegende Erfindung betrifft eine Druckplattenbaugruppe für eine Reibungskupplung, umfassend eine zur Verbindung mit einer Widerlageranordnung ausgebildete Gehäuseanordnung, eine in der Gehäuseanordnung in Richtung einer Drehachse bewegbar gehaltene Anpressplatte, eine Kraftbeaufschlagungsanordnung, im Kraftübertragungsweg zwischen der Kraftbeaufschlagungsanordnung und der Anpressplatte eine Verschleißnachstellvorrichtung, umfassend wenigstens ein zur Verschleißnachstellung in einer Nachstellrichtung bewegbares Nachstellelement, wenigstens eine Verschleißerfassungsanordnung, umfassend ein an der Anpressplatte vorgesehenes Erfassungselement, das bei Auftreten von Verschleiß in Anlage an einer bezüglich der Gehäuseanordnung feststehenden Blockieranordnung kommt.

Eine derartige Druckplattenbaugruppe ist beispielsweise aus der DE 102 27 330 A1 bekannt. Die Verschleißnachstellvorrichtung dieser bekannten Druckplattenbaugruppe umfasst zwei bezüglich einander drehbare und mit jeweiligen Rampenflächenbereichen aneinander anliegende Nachstellringe. Einer dieser Ringe steht unter der Beaufschlagung des hier als Kraftbeaufschlagungsanordnung wirksamen Kraftspeichers. Der andere Ring stützt sich axial an der Anpressplatte ab und ist durch eine Vorspannfeder zur Bewegung in Umfangsrichtung, also zur Bewegung in einer Nachstellrichtung, vorgespannt. Ein als Blattfederelement ausgebildetes Erfassungselement ist in einem Endbereich an der radialen Innenseite der beiden Nachstellringe an der Anpressplatte festgelegt und greift mit einem Erfassungsabschnitt nach radial außen über die Nachstellringe.

Bezüglich des Gehäuses ist ein Blockierelement festgelegt. Dieses kann beispielsweise im zusammengesetzten Zustand einer Reibungskupplung zwischen der Druckplattenbaugruppe und einem als Widerlageranordnung dienenden Schwungrad festgeklemmt sein. Mit einem Blockierabschnitt überlappt das Blockierelement den nach radial außen greifenden Bereich des Erfassungselements, also den Erfassungsabschnitt, so dass bei übermäßiger axialer Bewegung der Anpressplatte und mithin auch des Erfassungselements der Erfassungsabschnitt an dem Blockierabschnitt zur Anlage kommt und sich nicht mehr weiter axial bewegen kann. Den dabei entstehenden größeren Zwischenraum zwischen diesem und der Anpressplatte füllt ein zur Bewegung in Umfangsrichtung vorgespannter Arretierschieber auf, so dass dafür gesorgt ist, dass bei einem nachfolgenden Ausrückvorgang das Erfassungselement nicht wieder in seine vorherige Lage zurückkommt. Es ist somit in seiner verschleißbedingten Lage bezüglich der Anpressplatte arretiert.

Da die über die Betriebslebensdauer hinweg auftretenden verschleißbedingten Bewegungen verschiedener Baugruppen entsprechend dem aufgetretenen Verschleiß oft nur minimale Bewegungen sind, die dann entsprechende Nachstellmechanismen in Bewegung setzen sollen, ist es erforderlich, dass die verschiedenen zur Verschleißerfassung und Nachstellung zusammenwirkenden Baugruppen sehr präzise ausgeführt bzw. eingebaut sind. Bereits geringste Fertigungs- bzw. Montagetoleranzen können dazu führen, dass der Verschleißerfassungsvorgang bzw. dementsprechend auch ein Verschleißnachstellvorgang beispielsweise zu früh, also bei zu wenig Verschleiß, oder zu spät auftritt, was zur Folge haben kann, dass, bedingt durch eine zur Unzeit erfolgende Verschleißkompensation der als Kraftbeaufschlagungsanordnung wirksame Kraftspeicher nicht mehr in dem dafür an sich vorgesehenen Kennlinienbereich arbeitet.

Eine gattungsgemäße Druckplattenbaugruppe ist aus DE-A-199 10 858 bekannt.

Es ist die Aufgabe der vorliegenden Erfindung, eine Druckplattenbaugruppe für eine Reibungskupplung vorzusehen, mit welcher die durchzuführenden Verschleißkompensationsvorgänge mit hoher Genauigkeit dann erfolgen, wenn eine Verschleißkompensation erforderlich ist.

Wie vorangehend bereits ausgeführt, ist es eine elementare Zielsetzung der vorliegenden Erfindung, dafür zu sorgen, dass eine Verschleißnachstellung zur Unzeit vermieden wird. Eine derartige Verschleißnachstellung könnte beispielsweise auch dann auftreten, wenn, beispielsweise zur Durchführung von Reparaturarbeiten oder auch beim Neuaufbau eines Antriebsstrangs, die Druckplattenbaugruppe von einer Widerlageranordnung, also beispielsweise einem Schwungrad, getrennt wird oder ist. Da dann keine der Kraftbeaufschlagungsanordnung entgegenwirkende Abstützkraft vorhanden ist, wird eine übermäßige Axialbewegung der Anpressplatte und mit dieser des Erfassungselements zwangsweise zu einer Anlage des Erfassungselements an der Blockieranordnung und in Folge dessen dann einer ungewünschten Verschleißnachstellung führen.

Eine gattungsgemäße Druckplattenbaugruppe ist aus DE-A-199 10 858 bekannt.

Erfindungsgemäß wird diese Aufgabe gelöst durch eine Druckplattenbaugruppe für eine Reibungskupplung, umfassend eine zur Verbindung mit einer Widerlageranordnung ausgebildete Gehäuseanordnung, eine in der Gehäuseanordnung in Richtung einer Drehachse bewegbar gehaltene Anpressplatte, eine Kraftbeaufschlagungsanordnung, im Kraftübertragungsweg zwischen der Kraftbeaufschlagungsanordnung und der Anpressplatte eine Verschleißnachstellvorrichtung, umfassend wenigstens ein zur Verschleißnachstellung in einer Nachstellrichtung bewegbares Nachstellelement, wenigstens eine Verschleißerfassungsanordnung, umfassend ein an der Anpressplatte vorgesehenes Erfassungselement, das bei Auftreten von Verschleiß in Anlage an einer bezüglich der Gehäuseanordnung feststehenden Blockieranordnung kommt, wobei die Blockieranordnung ein zur Verschleißerfassung bezüglich des Gehäuses im Wesentlichen feststehendes Blockierelement und ein mit dem Blockierelement zur Lagejustierung eines Blockierabschnitts der Blockieranordnung zusammenwirkendes Justierelement umfasst, wobei das Blockierelement bezüglich der Gehäuseanordnung zur Bewegung zwischen einer Aktiv-Stellung und einer Inaktiv-Stellung getragen ist.

Da bei der erfindungsgemäß aufgebauten Druckplattenbaugruppe die Blockieranordnung justierbar ist, also auch deren Blockierwechselwirkung mit dem Erfassungselement justierbar ist, kann eine Anpassung an spezielle bauliche Gegebenheiten, beispielsweise die bei jedem aufgebauten Exemplar in Summe auftretenden Fertigungstoleranzen, erfolgen. Dies bedeutet, dass nach dem Zusammensetzen einer derartigen Druckplattenbaugruppe in einem Justiervorgang die Blockieranordnung derart einjustiert werden kann, dass eine optimale Wechselwirkung der zur Verschleißerfassung bzw. Kompensation wirkenden Baugruppen erreicht werden kann.

Um die Justierung leicht und mit hoher Präzision vornehmen zu können, wird vorgeschlagen, dass das Justierelement eine Justierschraube mit einem Gewindebereich umfasst.

Bei einer baulich sehr einfach zu realisierenden Ausgestaltungsform kann vorgesehen sein, dass das Justierelement an dem Blockierelement zur Lagejustierung bewegbar getragen ist und den Blockierabschnitt aufweist. Durch die Veränderung der Lage des Justierelements bezüglich des Blockierelements wird es somit möglich, im zusammengefügten Zustand auch die Lage des Blockierabschnitts zu variieren.

Dabei kann beispielsweise vorgesehen sein, dass das Justierelement einen an dem Blockierelement getragenen Schaftbereich und einen bezüglich des Schaftbereichs vorspringenden Kopfbereich zur Bereitstellung des Blockierabschnitts aufweist. Der Schaftbereich ist dabei beispielsweise dann als Außengewindeschaft aufgebaut.

Zur Wechselwirkung mit dem Erfassungselement kann vorgesehen sein, dass der Kopfbereich an seiner schaftzugewandten Seite den Blockierbereich aufweist. Alternativ ist es möglich, dass der Kopfbereich an seiner schaftzugewandten Seite den Blockierabschnitt aufweist. Je nachdem, welche Seite des Kopfbereichs den Blockierabschnitt bildet, ist es möglich, das Justierelement an sich mehr oder weniger stark in dem Volumenbereich der Druckplattenbaugruppe integriert anzuordnen und somit einerseits Bauraum zu sparen, im anderen Falle möglicherweise einen leichteren Zugang zur Justierung zu gewährleisten.

Bei einer weiteren erfindungsgemäßen Ausgestaltungsvariante wird vorgeschlagen, dass das Justierelement bezüglich des Gehäuses zur Lagejustierung des an dem Blockierelement vorgesehenen Blockierabschnitts getragen ist und auf das Blockierelement einwirkt.

Um dabei die Justierbarkeit weiterhin zu erleichtern, wird vorgeschlagen, dass das Blockierelement wenigstens bereichsweise flexibel ist. Durch die Belastung des Blockierelements vermittels des Justierelements kann also das Blockierelement auf Grund seiner wenigstens bereichsweisen Flexibilität verformt und mithin in eine zur Wechselwirkung mit dem Erfassungselement optimale Lage gebracht werden.

Dabei kann beispielsweise vorgesehen sein, dass das Justierelement einen bezüglich des Gehäuses getragenen Schaftbereich aufweist, wobei dieser Schaftbereich dann beispielsweise wieder als Außengewindeschaft ausgebildet sein kann.

Zur Wechselwirkung des Justierelements mit dem Blockierelement kann vorgesehen sein, dass das Justierelement mit dem Schaftbereich auf das Blockierelement zur Lagejustierung einwirkt.

Bei einer alternativen Variante wird vorgeschlagen, dass das Justierelement einen bezüglich des Schaftbereichs vorspringenden Kopfbereich aufweist und mit dem Kopfbereich auf das Blockierelement zur Lagejustierung einwi rkt.

Vorzugsweise ist vorgesehen, dass das Blockierelement bei an einer Widerlageranordnung festgelegter Gehäuseanordnung in seiner Aktiv-Stellung arretiert ist.

Um auch bei der Bewegung zwischen der Aktiv-Stellung und der Inaktiv-Stellung den erforderlichen Bauraum möglichst klein zu halten, wird vorgeschlagen, dass das Blockierelement zwischen seiner Aktiv-Stellung und seiner Inaktiv-Stellung in Richtung der Drehachse verlagerbar ist.

Hierzu kann beispielsweise an dem Blockierelement oder/und an der Gehäuseanordnung wenigstens ein Bewegungsführungselement zur Führung des Blockierelements in Richtung der Drehachse zwischen seiner Aktiv-Stellung und seiner Inaktiv-Stellung vorgesehen sein.

Eine baulich sehr einfach realisierbare Variante kann dabei vorsehen, dass das Bewegungsführungselement wenigstens einen an dem Blockierelement festgelegten und in einer Öffnung bezüglich der Gehäuseanordnung axial bewegbar geführten Führungsschaftbereich aufweist.

Bei einer alternativen Variante wird vorgeschlagen, dass das Justierelement ein Bewegungsführungselement bildet. Hier kann eine Funktionenverschmelzung in ein- und demselben Bauteil dazu genutzt werden, den Aufbau weiter zu vereinfachen.

Der Aufbau der erfindungsgemäßen Druckplattenbaugruppe kann zur Umsetzung eines erfassten Verschleißes in eine entsprechende Nachstellbewegung derart ausgebildet sein, dass das Erfassungselement durch einen Arretierschieber in seiner verschleißbedingten Lage bezüglich der Anpressplatte arretierbar ist und dass das Erfassungselement oder/und der Arretierschieber das Nachstellelement in seiner verschleißbedingten Nachstellstellung bezüglich der Anpressplatte hält.

Die vorliegende Erfindung betrifft ferner eine Reibungskupplung, insbesondere für den Antriebsstrang eines Fahrzeugs, umfassend eine erfindungsgemäß aufgebaute Druckplattenbaugruppe, eine mit der Gehäuseanordnung fest verbundene Widerlageranordnung sowie eine zwischen der Anpressplatte und der Widerlageranordnung angeordnete Kupplungsscheibenanordnung.

Die vorliegende Erfindung wird nachfolgend mit Bezug auf die beiliegenden Figuren detailliert beschrieben. Es zeigt.
- Fig. 1: eine perspektivische Ansicht einer Druckplattenbaugruppe, betrachtet von der Gehäuseseite her;
- Fig. 2: eine der Fig. 1 entsprechende Darstellung einer Druckplattenbaugruppe mit teilweise aufgeschnittenem Gehäuse;
- Fig. 3: eine Teil-Längsschnittansicht der in Fig. 2 gezeigten Druckplattenbaugruppe im Bereich einer Verschleißerfassungsanordnung;
- Fig. 4: eine der Fig. 3 entsprechende Darstellung einer alternativen Ausgestaltungsart;
- Fig. 5: eine der Fig. 3 entsprechende Darstellung einer alternativen Ausgestaltungsart;
- Fig. 6: eine der Fig. 3 entsprechende Darstellung einer alternativen Ausgestaltungsart;
- Fig. 7: eine der Fig. 3 entsprechende Darstellung einer alternativen Ausgestaltungsart.

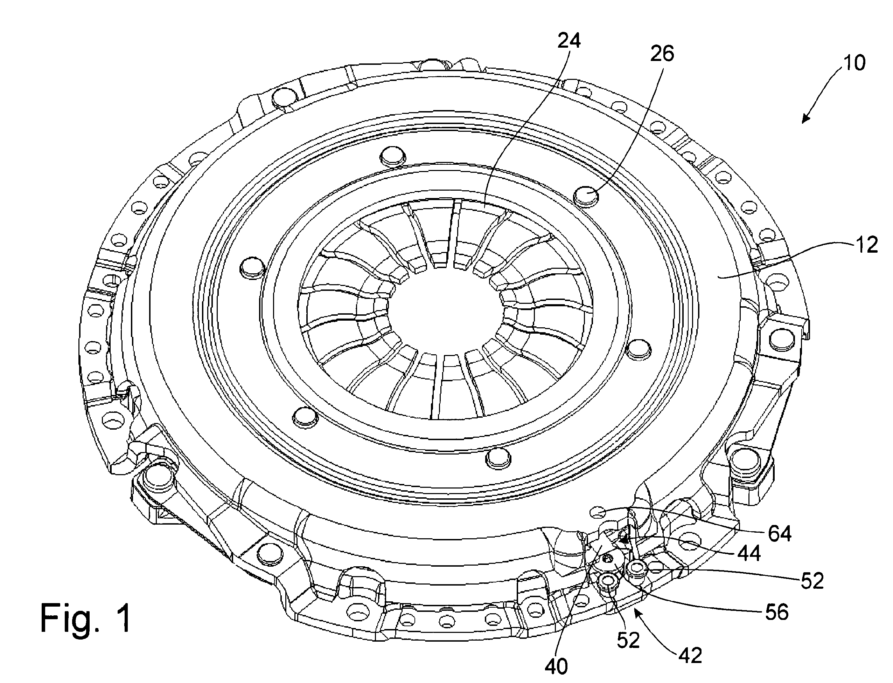

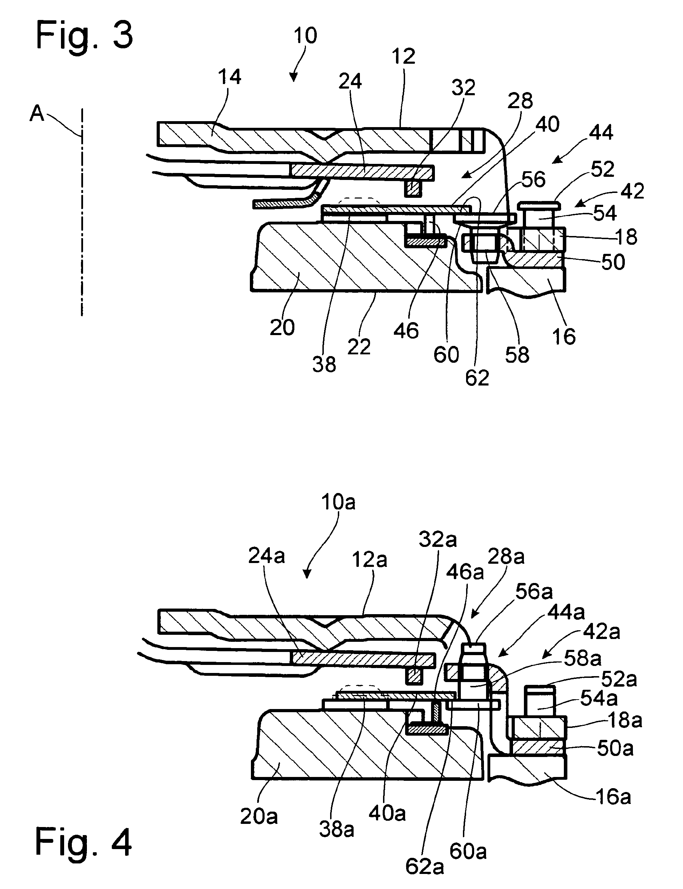

Die Fig. 1 bis 3 zeigen eine erste Ausgestaltungsform einer allgemein mit 10 bezeichneten Druckplattenbaugruppe für eine Kraftfahrzeugreibungskupplung. Diese Druckplattenbaugruppe umfasst ein im Wesentlichen topfartig gestaltetes Gehäuse 12 mit einem Bodenbereich 14 und einem an einer Widerlageranordnung, beispielsweise einem in der Fig. 3 angedeuteten Schwungrad 16, durch eine Vielzahl von Schraubbolzen oder dergleichen festzulegenden Randbereich 18. In dem Gehäuse 12 ist eine um eine Drehachse A sich ringartig erstreckende Anpressplatte 20 angeordnet, die eine Reibfläche 22 zur Zusammenwirkung mit einer nicht dargestellten Kupplungsscheibe aufweist. Eine Kraftbeaufschlagungsanordnung, beispielsweise ein als Membranfeder ausgebildeter Kraftspeicher 24, ist im radial mittleren Bereich über eine Mehrzahl von Distanzbolzen 26 oder dergleichen bezüglich des Gehäuses 12 getragen. In seinem radial äußeren Bereich beaufschlagt der Kraftspeicher 24 die Anpressplatte 20 über eine nachfolgend noch detailliert erläuterte Verschleißnachstellvorrichtung 28. In seinem radial inneren mit einer Mehrzahl von Federzungen 30 ausgebildeten Bereich kann der Kraftspeicher 24 durch eine Betätigungsanordnung, beispielsweise einen Ausrücker, beaufschlagt werden.

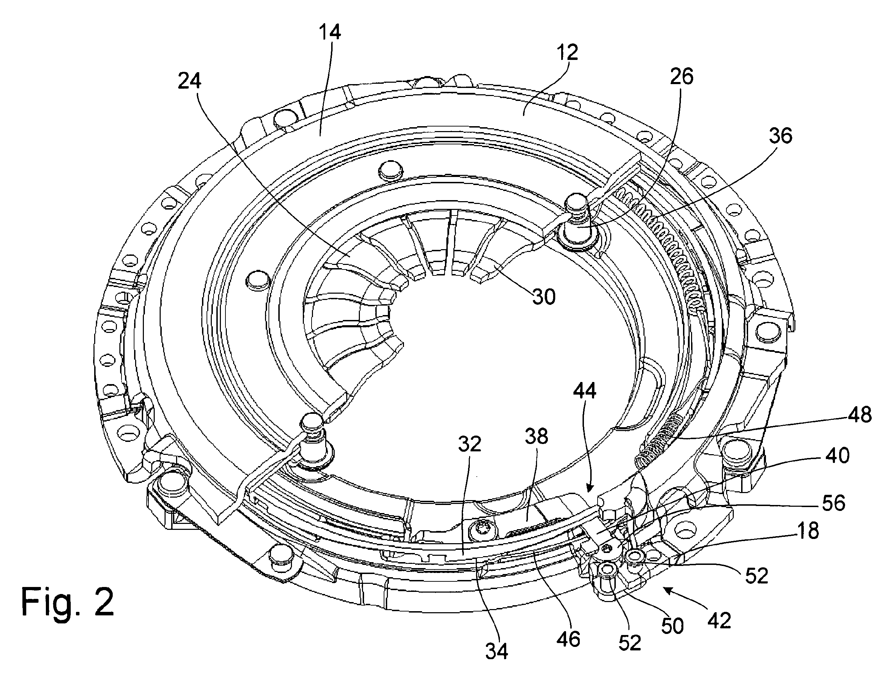

Die Verschleißnachstellvorrichtung 28 umfasst im dargestellten Beispiel ein als Nachstellring 32 ausgebildetes Nachstellelement. Dieser Nachstellring 32 wird durch den Kraftspeicher 24 direkt axial belastet und gegen die Anpressplatte 20 gepresst. Über mehrere in Umfangsrichtung verteilt liegende Rampenflächenbereiche 34 stützt sich der Nachstellring 32 an entsprechend komplementär geformten Rampenflächenbereichen der Anpressplatte 20 ab. Durch eine in der Fig. 2 erkennbare Vorspannfeder 36 ist der Nachstellring 32 zur Bewegung in Umfangsrichtung bezüglich der Anpressplatte 20 vorgespannt.

Es sei hier darauf hingewiesen, dass die Verschleißnachstellvorrichtung 28 auch mit zwei Nachstellringen ausgebildet sein könnte, so dass die mit dem Nachstellring 32 bzw. dessen Rampenflächenbereichen 34 zusammenwirkenden komplementären Rampenflächenbereiche dann nicht an der Anpressplatte 20, sondern an einem weiteren Nachstellring vorgesehen wären und dieser weitere Nachstellring dann beispielsweise zur nachfolgend noch beschriebenen Durchführung einer Verschleißkompensation bezüglich der Anpressplatte in Umfangsrichtung bewegbar wäre, an Stelle des Nachstellrings 32.

Man erkennt in der Fig. 2 weiter ein blattfederartig ausgebildetes Erfassungselement 38. Dieses ist an einem Umfangsendbereich an der Anpressplatte 20 festgelegt und erstreckt sich in Umfangsrichtung entlang der Innenseite des Nachstellrings 32. Mit einem am anderen Umfangsendbereich liegenden Erfassungsabschnitt 40 greift das blattfederartige Erfassungselement 38 nach radial außen über den Nachstellring 32 hinweg. Zusammen mit einer nachfolgend noch erläuterten Blockieranordnung 42 bildet das Erfassungselement 38 mit seinem Erfassungsabschnitt 40 eine allgemein mit 44 bezeichnete Verschleißerfassungsanordnung. Es sei darauf hingewiesen, dass grundsätzlich eine einzige derartige Verschleißerfassungsanordnung 44 ausreichend ist. Es können jedoch über den Umfang verteilt mehrere davon vorgesehen sein.

Das Erfassungselement 38 wirkt mit der Blockieranordnung 42 derart zusammen, dass bei verschleißbedingter übermäßiger Bewegung der Anpressplatte 20 in axialer Richtung in Fig. 3 nach unten, also auf die Widerlageranordnung 16 zu, der Erfassungsabschnitt 40 an der Blockieranordnung 42 anstößt und der verschleißbedingt anhaltenden Axialbewegung der Anpressplatte 20 nicht weiter folgen kann. Dabei bewegt sich der Erfassungsabschnitt 40 dann axial weiter von der Anpressplatte 20 weg. Der so entstehende zusätzliche Zwischenraum wird durch einen keilartigen Arretierschieber 46 ausgefüllt, der unter der Vorspannung einer weiteren Vorspannfeder 48 zur Bewegung in Umfangsrichtung vorgespannt ist, welche Bewegungsrichtung derjenigen des Nachstellrings 32 bei Durchführung einer Verschleißkompensation entspricht. Durch den in Umfangsrichtung nachgeführten Arretierschieber 46 ist dafür gesorgt, dass das Erfassungselement 38 mit seinem Erfassungsabschnitt 40 nicht wieder in die zuvor vorhandene Einbaulage zurückkehren kann.

Beispielsweise am Arretierschieber 46 kann ein mit dem Nachstellring 32 zusammenwirkender Halteabschnitt vorgesehen sein. Bewegt sich der Arretierschieber 46 verschleißbedingt geringfügig in Umfangsrichtung, so gibt der Halteabschnitt den Nachstellring 32 in entsprechendem Ausmaß zur Bewegung in Umfangsrichtung frei. Bei einem nachfolgend durchzuführenden Ausrückvorgang, also dann, wenn der Kraftspeicher 24 den Nachstellring 32 weniger stark belastet, kann dieser der Vorspannung der Vorspannfeder 36 folgend sich in Umfangsrichtung, also einer Verschleißnachstellrichtung, bewegen, bis er durch den Halteabschnitt des Arretierschiebers 46 wieder gehalten ist. Bei dieser Umfangsbewegung verlagert sich die Auflagefläche des Nachstellrings 32 für den Kraftspeicher 24 axial, da die Rampenflächenbereiche 34 des Nachstellrings 32 sich entlang der komplementären Rampenflächen an der Anpressplatte 20 entlang bewegen und somit der ganze Nachstellring 32 axial verschoben wird. Auf diese Art und Weise wird bei übermäßiger Axialverlagerung der Anpressplatte ein entsprechendes Ausmaß an Verschleißkompensation erlangt, so dass unabhängig von der verschleißbedingten Variation der Einbaulage der Anpressplatte 20 die Einbaulage des Kraftspeichers 24 konstant gehalten werden kann.

Es sei hier darauf hingewiesen, dass alternativ auch das Erfassungselement 38 beispielsweise mit seinem Erfassungsabschnitt 40 den Nachstellring 32 in seiner verschleißbedingt vorzusehenden Einbaulage halten kann, beispielsweise indem es auf einer entsprechenden Rampenfläche desselben aufliegt.

Das Funktionsprinzip einer derartigen Verschleißausgleichsvorrichtung 28 ist grundsätzlich auch aus der eingangs genannten DE 102 27 330 A1 bekannt, so dass auf weitergehende Ausführungen hier verzichtet werden kann.

Die Blockieranordnung 42 umfasst ein beispielsweise aus Blechmaterial aufgebautes Blockierelement 50. Dieses trägt in seinem radial äußeren Bereich ein beispielsweise als Niet ausgebildetes Bewegungsführungselement 52 mit einem Schaftbereich 54. Dieser durchgreift eine im Randbereich 18 des Gehäuses 12 vorgesehene Öffnung und ist somit grundsätzlich frei in Richtung der Drehachse A verschiebbar. In dem in der Fig. 3 gezeigten mit der Widerlageranordnung 16 zusammengefügten Zustand der Druckplattenbaugruppe 10 ist das Blockierelement 50 mit seinem radial äußeren Bereich fest zwischen der Widerlageranordnung 16 und dem Randbereich 18 des Gehäuses 12 eingeklemmt und somit arretiert. Ist die Druckplattenbaugruppe 10 jedoch von der Widerlageranordnung 16 entfernt, so kann sich die gesamte Blockieranordnung 42 axial verlagern, und zwar so weit, dass eine ungewünschte Blockierwechselwirkung mit dem Erfassungsabschnitt 40 des Erfassungselements 38 nicht auftreten kann. Auf diese Art und Weise kann verhindert werden, dass dann, wenn die Druckplattenbaugruppe 10 nicht mit einer Widerlageranordnung 16 verbunden ist oder von einer solchen losgelöst wird, eine ungewünschte Verschleißkompensation erfolgen wird, wenn der Erfassungsabschnitt 40 bei dann nicht durch eine Gegenkraft abgestützter Axialbewegung der Anpressplatte 20 sich übermäßig weit bezüglich des Gehäuses 12 verlagert.

Es sei darauf hingewiesen, dass, wie die Fig. 2 dies zeigt, in Zuordnung zu dem Blockierelement 50 beispielsweise zwei in Umfangsrichtung versetzt liegende Bewegungsführungselemente 52 vorgesehen sein können, die nicht nur die axiale Führung, sondern auch eine definierte Umfangspositionierung für das Blockierelement vorgeben, also verhindern, dass dieses sich am Gehäuse 12 drehen kann. Die Ausgestaltung als Niete mit einem Kopfbereich verhindert, dass das Blockierelement 50 sich vollständig vom Gehäuse 12 lösen kann.

Bei der in Fig. 3 gezeigten Ausgestaltungsform der Blockieranordnung 42 umfasst diese weiterhin ein Justierelement 56, hier in Form einer Schraube. Ein mit Außengewinde versehener Schaftbereich 58 ist in eine entsprechende Öffnung am radial inneren Bereich des Blockierelements 50 eingeschraubt. Ein Kopfbereich 60 bildet mit seiner vom Schaftbereich 58 abgewandt liegenden Seite einen Blockierabschnitt 62 der Blockieranordnung 42. An diesem Blockierabschnitt 62 kommt der Erfassungsabschnitt 40 des Erfassungselements 38 zur Anlage, wenn übermäßiger Verschleiß auftritt.

Im Gehäuse 12 kann eine in der Fig. 1 erkennbare Öffnung 64 vorgesehen sein, durch welche hindurch ein Werkzeug an das schraubenartig ausgebildete Justierelement 56 herangeführt werden kann, um dieses zur Justierung der Lage des Blockierabschnitts 62 bezüglich des Blockierelements 50 zu drehen. Diese Justierung kann dann vorgenommen werden, wenn die Druckplattenbaugruppe 10 zusammengebaut ist, um durch die Summierung der Fertigungstoleranzen der verschiedenen Bauteile aufgetretene Lageungenauigkeiten auszugleichen. Hierzu kann beispielsweise die Druckplattenbaugruppe 10 in Kontakt mit einer Referenz-Widerlageranordnung gebracht werden, welche eine für den Neuzustand vorgesehene Lage der Anpressplatte 20 bezüglich des Gehäuses 12 und mithin auch der Blockieranordnung 42 vorgibt und somit eine exakte Einjustierung der Lage des Blockierabschnitts 62 ermöglicht. Nach erfolgter Einjustierung kann dann das Justierelement 56 permanent am Blockierelement 50 arretiert werden, beispielsweise durch Verschweißung oder durch Verklebung, um somit sicherzustellen, dass über die Betriebslebensdauer hinweg diese Lage exakt beibehalten bleibt. Auch nachfolgend durchzuführende Raparaturarbeiten, bei welchen die Druckplattenbaugruppe 10 von der Widerlageranordnung 16 gelöst werden muss, beeinträchtigen dann die Lage des Blockierabschnitts 62 nicht, da bei dem Wiederansetzen der Druckplattenbaugruppe 10 an die Widerlageranordnung 16 das Blockierelement 50 mit dem Justierelement 56 sich wieder in die auch für den Neuzustand vorgesehene Einbaulage begibt und in dieser arretiert wird.

Ein besonderer Vorteil der vorangehend mit Bezug auf die Fig. 3 detaillierter erläuterten Ausgestaltungsform der Blockieranordnung 42 ist, dass, wie die Fig. 3 dies deutlich zeigt, diese über die Außenkontur des Gehäuses 12 praktisch nicht hervorsteht, also im Wesentlichen vollständig in der Kontur des Gehäuses 12 verschwindet und somit keinen zusätzlichen Bauraum beansprucht. Gleichwohl ist sowohl die Feinjustierung der Lage des Blockierabschnitts 62, als auch ein Verhindern einer ungewollten Nachstellung durch eine permanent starre Arretierung der Blockieranordnung 42 am Gehäuse 12 realisiert.

Eine abgewandelte Ausgestaltungsform ist in Fig. 4 gezeigt. Diese entspricht hinsichtlich des grundsätzlichen Aufbaus der Druckplattenbaugruppe der in Fig. 3 gezeigten, so dass auf die diesbezüglichen Ausführungen verwiesen wird. Im Folgenden wird auch mit Bezug auf die weiteren Ausgestaltungsformen lediglich auf die zur Ausgestaltungsform der Fig. 3 bestehenden Unterschiede eingegangen. In Fig. 4 sind Komponenten, welche hinsichtlich Aufbau bzw. Funktion den vorangehend beschriebenen Komponenten entsprechen, mit dem gleichen Bezugszeichen unter Hinzufügung des Anhangs "a" erläutert.

Man erkennt in Fig. 4, dass im Vergleich zur vorangehend beschriebenen Ausgestaltungsform das Justierelement 56a in umgekehrter Richtung am Blockierelement 50a vorgesehen ist. D.h., der Kopfbereich 60a liegt nunmehr der Anpressplatte 20a zugewandt, so dass eine dem Schaftbereich 58a zugewandt liegende Seite des Kopfbereichs 60a den Blockierabschnitt 62a bildet. An diesem über den Schaftbereich 58a vorspringenden Bereich des Justierelements 56a kommt der Erfassungsabschnitt 40a des Erfassungselements 38a nunmehr zur Auflage, wenn übermäßiger Verschleiß auftritt.

Man erkennt bei der in Fig. 4 gezeigten Variante den besonderen Vorteil, dass die Baugröße der Blockieranordnung 42a in Richtung auf die Anpressplatte 20a zu deutlich kleiner ist. Die wesentlichen Bereiche der Blockieranordnung 42a, insbesondere des Justierelements 56a, erstrecken sich weiter von der Anpressplatte 20a weg. Es ist somit nicht erforderlich, die Anpressplatte 20a mit entsprechenden Aussparungen zu versehen, was insbesondere bei vergleichsweise dünnen Anpressplatten aus Festigkeitsgründen besonders vorteilhaft ist.

Da bei dieser Ausgestaltungsvariante der Kopfbereich 60a von außen her praktisch nicht zugänglich ist, kann am axialen Endbereich des Schaftbereichs 58a eine Werkzeugangriffsformation, beispielsweise in Form einer Inbusöffnung oder dergleichen, vorgesehen sein, um zum Vornehmen der Lagejustierung das Justierelement 56a mit seinem Außengewindebereich in dem an dem Blockierelement 50a vorgesehenen Innengewinde drehen zu können. Nach erfolgter Justierung kann wieder eine permanente Festlegung des Justierelements 56a bezüglich des Blockierelements 50a erfolgen.

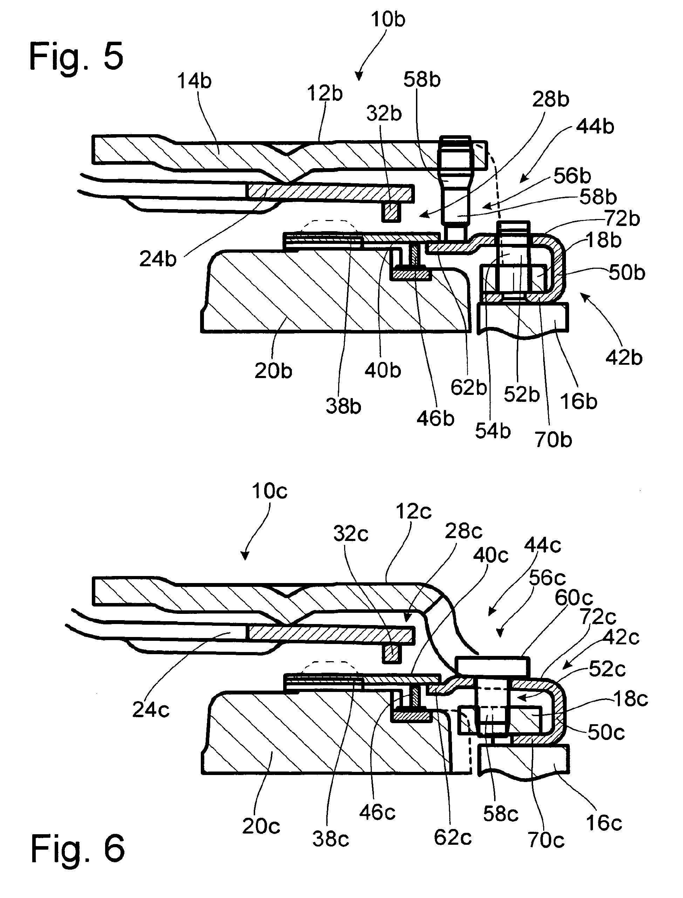

Eine weitere abgewandelte Ausgestaltungsform ist in Fig. 5 gezeigt. Hier sind Komponenten, welche hinsichtlich Aufbau bzw. Funktion vorangehend beschriebenen Komponenten entsprechen, mit dem gleichen Bezugszeichen unter Hinzufügung eines Anhangs "b" bezeichnet.

Man erkennt hier, dass das Blockierelement 50b grundsätzlich eine im Wesentlichen U-förmige Gestalt aufweist und mit einem U-Schenkel 70b einerseits das bzw. die Bewegungsführungselemente 52b fest trägt und andererseits zwischen dem Randbereich 18b und der Widerlageranordnung 16b fest einspannbar ist. Der andere U-Schenkel 72b erstreckt sich in axialem Abstand zum erstgenannten U-Schenkel 70b den Randbereich 18b radial übergreifend nach innen, um dort an seinem inneren Endbereich den Blockierabschnitt 62b bereitzustellen. Dieser überlappt den Erfassungsabschnitt 40b des Erfassungselements 38b radial und in Umfangsrichtung. Insbesondere auch auf Grund seiner U-förmigen Kontur ist das beispielsweise aus Blechmaterial geformte Blockierelement 50b flexibel, was die axiale Einstellung der Lage des Blockierabschnitts 62b gestattet. Hierzu ist das Justierelement 56b vorgesehen, das mit einem mit Außengewinde versehenen Schaftbereich 58b ausgeführt und mit diesem Außengewinde in eine entsprechende Innengewindeöffnung am Bodenbereich 14b des Gehäuses 12b eingeschraubt ist. Durch Drehen am Justierelement 56b ändert sich die axiale Lage desselben, um entsprechend auch die axiale Lage des Blockierabschnitts 62b am U-Schenkel 72b des Blockierelements 50b zu verändern. Um dabei eine sehr exakte Bewegungsführung für diesen U-Schenkel 72b vorzusehen, kann dieser zusätzlich an den auch die axiale Bewegbarkeit des gesamten Blockierelements 50b bezüglich des Gehäuses 12b zulassenden Bewegungsführungselementen 52b geführt sein. Hierzu kann der U-Schenkel 72b entsprechende von den Bewegungsführungselementen 52b durchgriffene Aussparungen aufweisen. Ist hier eine Führungswechselwirkung nicht erforderlich, so stellt dieser Durchgriff zumindest die verliersichere Halterung des Blockierelements 50b am Gehäuse 12b sicher.

Auch diese Ausgestaltungsform weist den Vorteil auf, dass einerseits die Blockieranordnung 42b möglichst geringen Überstand über die Außenkontur des Gehäuses 12b aufweist und dass andererseits auch im Bereich der Anpressplatte 20b keine zusätzlichen Aussparungen zur Aufnahme irgendwelcher Baugruppen der Blockieranordnung 42b vorgesehen sein müssen.

Bei der in Fig. 6 gezeigten Ausgestaltungsform sind Komponenten, welche vorangehend beschriebenen Komponenten hinsichtlich Aufbau bzw. Funktion entsprechen, mit dem gleichen Bezugszeichen unter Hinzufügung eines Anhangs "c" bezeichnet.

Man erkennt auch hier eine im Wesentlichen U-förmige Gestalt des Blockierelements 50c der Blockieranordnung 42c mit einem zwischen der Widerlageranordnung 16c und dem Randbereich 18c fest einspannbaren U-Schenkel 70c. Der andere auf Grund der Flexibilität grundsätzlich axial bezüglich des Gehäuses 12c verlagerbare U-Schenkel 72c erstreckt sich wieder nach radial innen und überlappt mit seinem Blockierabschnitt 62c den Erfassungsabschnitt 40c. Das Justierelement 56c ist wieder schraubenartig ausgebildet mit einem mit Außengewinde versehenen und in den Randbereich 18c eingeschraubten Schaftbereich 58c und einem bezüglich diesem vorspringenden Kopfbereich 60c. Der Schaftbereich 58c durchsetzt eine zugeordnete Öffnung im U-Schenkel 72c, so dass dieser unter elastischer Vorspannung des Blockierelements 50c an der dem Schaftbereich 58c zugewandten Seite des Kopfbereichs 60c zur Anlage kommt und mit seinem Blockierabschnitt 62c in der richtigen Axialpositionierung haltbar bzw. einstellbar ist. Durch Drehen an dem Justierelement 56c kann diese axiale Positionierung verändert bzw. beeinflusst werden. Nach erfolgter korrekter Positionierung kann das Justierelement 56c beispielsweise durch Verschweißung am Randbereich 18c des Gehäuses 12c festgelegt werden.

Auch bei dieser Ausgestaltungsvariante ist die Blockieranordnung 42c bzw. das den Blockierabschnitt 62c bereitstellende Blockierelement 50c bei nicht mit der Widerlageranordnung 16c verbundenem Gehäuse 12c grundsätzlich in derartigem Ausmaß axial verlagerbar, dass eine ungewünschte zu einer Nachstellung führende Wechselwirkung zwischen dem Erfassungsabschnitt 40c und dem Blockierabschnitt 62c vermieden wird.

Es ist selbstverständlich, dass bei dieser Ausgestaltungsvariante dem Blockierelement 50c neben dem hier als Bewegungsführungselement wirksamen Justierelement 56c noch ein weiteres in Umfangsrichtung neben dem Justierelement 56c vorgesehenes Bewegungsführungselement zugeordnet sein kann, das beispielsweise ebenfalls in den Randbereich 18c eingeschraubt und dort fest arretiert werden kann, aber nur einen Schaftbereich aufweisen kann, so dass zwar die Bewegungsführung in axialer Richtung verbessert werden kann und ein Verdrehen bezüglich des Gehäuses 12c vermieden werden kann, die Justierwechselwirkung zum Vorgeben der Einbaulage des Blockierabschnitts 62c jedoch nur durch das einzig vorgesehene Justierelement 56c dieser Blockieranordnung 42c sichergestellt ist.

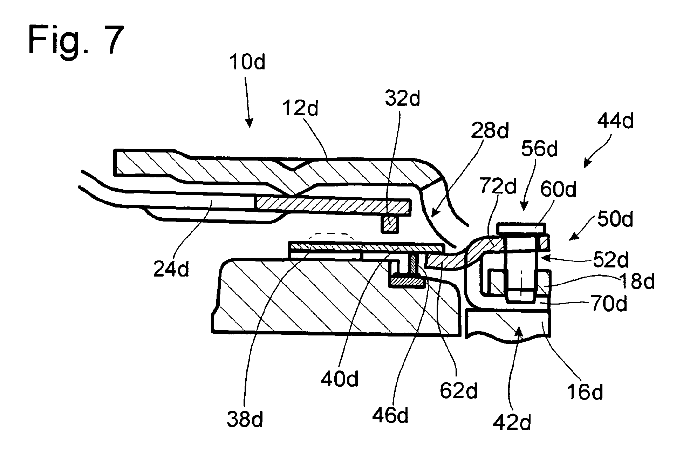

Bei der in Fig. 7 dargestellten Ausgestaltungsform sind Bauteile, die vorangehend beschriebenen Bauteilen hinsichtlich Aufbau bzw. Funktion entsprechen, mit dem gleichen Bezugszeichen unter Hinzufügung eines Anhangs "d" bezeichnet.

Auch bei der in Fig. 7 gezeigten Ausgestaltungsform ist das Justierelement 56d in Form einer Schraube in den Randbereich 18d eingeschraubt. Der U-Schenkel 70d ist wieder zwischen dem Randbereich 18d des Gehäuses 12d und der Widerlageranordnung 16d fest einklemmbar. Grundsätzlich ist das U-förmig ausgestaltete Blockierelement 50d der Blockieranordnung 42d aber so angeordnet, dass die beiden U-Schenkel mit ihren freien Enden nach radial außen positioniert sind. Der U-Schenkel 72d, der nicht zwischen dem Randbereich 18d und der Widerlageranordnung 16d eingespannt ist, ist nach radial innen hin verlängert, beispielsweise durch Ausbiegen eines ansonsten dem Verbindungsstegbereich entsprechenden Abschnitts des das Blockierelement 50d bereitstellenden Blechteils. Mit diesem Abschnitt erstreckt sich der somit verlängerte U-Schenkel 72d unter Bereitstellung des Blockierabschnitts 62d weiter nach radial innen zur Überlappung mit dem Erfassungsabschnitt 40d. Durch Drehen des Justierelements 56d und somit Ändern der axialen Lage von dessen Kopfbereich 60d bezüglich des Randbereichs 18d verschwenkt der U-Schenkel 72d auch mit seinem nach radial innen verlängerten Abschnitt, so dass entsprechend die Lage des Blockierabschnitts 62d verändert werden kann.

Die Axialbewegbarkeit des gesamten Blockierelements 50d zum Vermeiden einer Blockierwechselwirkung mit dem Erfassungselement 38d wird wiederum unter Einsatz des Justierelements 56d als Bewegungsführungselement 52d und ggf. unter Einsatz eines weiteren Bewegungsführungselements gewährleistet.

## Patentansprüche

1. Druckplattenbaugruppe für eine Reibungskupplung, umfassend:
- eine zur Verbindung mit einer Widerlageranordnung (16; 16a; 16b; 16c; 16d) ausgebildete Gehäuseanordnung (12; 12a; 12b; 12c; 12d),
- eine in der Gehäuseanordnung (12; 12a; 12b; 12c; 12d) in Richtung einer Drehachse (A) bewegbar gehaltene Anpressplatte (20; 20a; 20b; 20c; 20d),
- eine Kraftbeaufschlagungsanordnung (24; 24a; 24b; 24c; 24d),
- im Kraftübertragungsweg zwischen der Kraftbeaufschlagungsanordnung (24; 24a; 24b; 24c; 24d) und der Anpressplatte (20; 20a; 20b; 20c; 20d) eine Verschleißnachstellvorrichtung (28; 28a; 28b; 28c; 28d), umfassend wenigstens ein zur Verschleißnachstellung in einer Nachstellrichtung bewegbares Nachstellelement (32; 32a; 32b; 32c; 32d),
- wenigstens eine Verschleißerfassungsanordnung (44; 44a; 44b; 44c; 44d), umfassend ein an der Anpressplatte (20; 20a; 20b; 20c; 20d) vorgesehenes Erfassungselement (38; 38a; 38b; 38c; 38d), das bei Auftreten von Verschleiß in Anlage an einer bezüglich der Gehäuseanordnung (12; 12a; 12b; 12c; 12d) feststehenden Blockieranordnung (42; 42a; 42b; 42c; 42d) kommt, wobei die Blockieranordnung (42; 42a; 42b; 42c; 42d) ein zur Verschleißerfassung bezüglich des Gehäuses (12; 12a; 12b; 12c; 12d) im Wesentlichen feststehendes Blockierelement (50; 50a; 50b; 50c; 50d) und ein mit dem Blockierelement (50; 50a; 50b; 50c; 50d) zur Lagejustierung eines Blockierabschnitts (62; 62a; 62b; 62c; 62d) der Blockieranordnung (42; 42a; 42b; 42c; 42d) zusammenwirkendes Justierelement (56; 56a; 56b; 56c; 56d) umfaßt,
**dadurch gekennzeichnet, dass** das Blockierelement (50; 50a; 50b; 50c; 50d) bezüglich der Gehäuseanordnung (12; 12a; 12b; 12c; 12d) zur Bewegung zwischen einer Aktiv-Stellung und einer Inaktiv-Stellung getragen ist.

2. Druckplattenbaugruppe nach Anspruch 1,
**dadurch gekennzeichnet, dass** das Justierelement (56; 56a; 56b; 56c; 56d) eine Justierschraube mit einem Gewindebereich umfasst.

3. Druckplattenbaugruppe nach Anspruch 2,
**dadurch gekennzeichnet, dass** das Justierelement (56; 56a) an dem Blockierelement (50; 50a) zur Lagejustierung bewegbar getragen ist und den Blockierabschnitt (62; 62a) aufweist.

4. Druckplattenbaugruppe nach Anspruch 3,
**dadurch gekennzeichnet, dass** das Justierelement (56; 56a) einen an dem Blockierelement getragenen Schaftbereich (58; 58a) und einen bezüglich des Schaftbereichs (58; 58a) vorspringenden Kopfbereich (60; 60a) zur Bereitstellung des Blockierabschnitts (62; 62a) aufweist.

5. Druckplattenbaugruppe nach Anspruch 4,
**dadurch gekennzeichnet, dass** der Kopfbereich (60) an seiner schaftabgewandten Seite den Blockierabschnitt (62) aufweist.

6. Druckplattenbaugruppe nach Anspruch 4,
**dadurch gekennzeichnet, dass** der Kopfbereich (60a) an seiner schaftzugewandten Seite den Blockierabschnitt (62a) aufweist.

7. Druckplattenbaugruppe nach Anspruch 2,
**dadurch gekennzeichnet, dass** das Justierelement (56b; 56c; 56d) bezüglich des Gehäuses (12b; 12c; 12d) zur Lagejustierung des an dem Blockierelement (50b; 50c; 50d) vorgesehenen Blockierabschnitts (62b; 62c; 62d) getragen ist und auf das Blockierelement (50b; 50c; 50d) einwirkt.

8. Druckplattenbaugruppe nach Anspruch 7,
**dadurch gekennzeichnet, dass** das Blockierelement (50b; 50c; 50d) wenigstens bereichsweise flexibel ist.

9. Druckplattenbaugruppe nach Anspruch 7 oder 8,
**dadurch gekennzeichnet, dass** das Justierelement (56b; 56c; 56d) einen bezüglich des Gehäuses (12b; 12c; 12d) getragenen Schaftbereich (58b; 58c; 58d) aufweist.

10. Druckplattenbaugruppe nach Anspruch 9,
**dadurch gekennzeichnet, dass** das Justierelement (56b) mit dem Schaftbereich (58b) auf das Blockierelement (50b) zur Lagejustierung einwirkt.

11. Druckplattenbaugruppe nach Anspruch 9,
**dadurch gekennzeichnet, dass** das Justierelement (56c; 56d) einen bezüglich des Schaftbereichs (58c; 58d) vorspringenden Kopfbereich (60c; 60d) aufweist und mit dem Kopfbereich (60c; 60d) auf das Blockierelement (50c; 50d) zur Lagejustierung einwirkt.

12. Druckplattenbaugruppe nach Anspruch 1,
**dadurch gekennzeichnet, dass** das Blockierelement (50; 50a; 50b; 50c; 50d) bei an einer Widerlageranordnung (16; 16a; 16c; 16c; 16d) festgelegter Gehäuseanordnung (12; 12a; 12b; 12c; 12d) in seiner Aktiv-Stellung arretiert ist.

13. Druckplattenbaugruppe nach Anspruch 1 oder 12,
**dadurch gekennzeichnet, dass** das Blockierelement (50; 50a; 50b; 50c; 50d) zwischen seiner Aktiv-Stellung und seiner Inaktiv-Stellung in Richtung der Drehachse (A) verlagerbar ist.

14. Druckplattenbaugruppe nach Anspruch 13,
**dadurch gekennzeichnet, dass** an dem Blockierelement (50; 50a; 50b; 50c; 50d) oder/und an der Gehäuseanordnung (12; 12a; 12b; 12c; 12d) wenigstens ein Bewegungsführungselement (52; 52a; 52b; 52c; 52d) zur Führung des Blockierelements (50; 50a; 50b; 50c; 50d) in Richtung der Drehachse (A) zwischen seiner Aktiv-Stellung und seiner Inaktiv-Stellung vorgesehen ist.

15. Druckplattenbaugruppe nach Anspruch 14,
**dadurch gekennzeichnet, dass** das Bewegungsführungselement (52; 52a; 52b) wenigstens einen an dem Blockierelement (50; 50a; 50b) festgelegten und in einer Öffnung bezüglich der Gehäuseanordnung (12; 12a; 12b) axial bewegbar geführten Führungsschaftbereich (54; 54a; 54b) aufweist.

16. Druckplattenbaugruppe nach Anspruch 4 und Anspruch 14,
**dadurch gekennzeichnet, dass** das Justierelement (56c; 56d) ein Bewegungsführungselement (52c; 52d) bildet.

17. Druckplattenbaugruppe nach einem der Ansprüche 1 bis 16,
**dadurch gekennzeichnet, dass** das Erfassungselement (38; 38a; 38b; 38c; 38d) durch einen Arretierschieber (46; 46a; 46b; 46c; 46d) in seiner verschleißbedingten Lage bezüglich der Anpressplatte (20; 20a; 20b; 20c; 20d) arretierbar ist und dass das Erfassungselement (38; 38a; 38b; 38c; 38d) oder/und der Arretierschieber (46; 46a; 46b; 46c; 46d) das Nachstellelement (32; 32a; 32b; 32c; 32d) in seiner verschleißbedingten Nachstellstellung bezüglich der Anpressplatte (20; 20a; 20b; 20c; 20d) hält.

18. Reibungskupplung, insbesondere für den Antriebsstrang eines Fahrzeugs, umfassend eine Druckplattenbaugruppe (10; 10a; 10b; 10c; 10d) nach einem der vorangehenden Ansprüche, eine mit der Gehäuseanordnung (12; 12a; 12b; 12c; 12d) fest verbundene Widerlageranordnung (16; 16a; 16b; 16c; 16d) sowie eine zwischen der Anpressplatte (20; 20a; 20b; 20c; 20d) und der Widerlageranordnung (16; 16a; 16b; 16c; 16d) angeordnete Kupplungsscheibenanordnung.

## Claims

1. Pressure-plate assembly for a friction clutch, comprising:
- a housing arrangement (12; 12a; 12b; 12c; 12d) which is configured for connection to an abutment arrangement (16; 16a; 16b; 16c; 16d),
- a pressing plate (20; 20a; 20b; 20c; 20d) which is held in the housing arrangement (12; 12a; 12b; 12c; 12d) such that it can be moved in the direction of a rotational axis (A),
- a force application arrangement (24; 24a; 24b; 24c; 24d),
- a wear adjustment apparatus (28; 28a; 28b; 28c; 28d) in the force transmission path between the force application arrangement (24; 24a; 24b; 24c; 24d) and the pressing plate (20; 20a; 20b; 20c; 20d), comprising at least one adjusting element (32; 32a; 32b; 32c; 32d) which can be moved in an adjusting direction for wear adjustment,
- at least one wear detection arrangement (44; 44a; 44b; 44c; 44d), comprising a detection element (38; 38a; 38b; 38c; 38d) which is provided on the pressing plate (20; 20a; 20b; 20c; 20d) and, when wear occurs, comes into contact with a blocking arrangement (42; 42a; 42b; 42c; 42d) which is stationary with regard to the housing arrangement (12; 12a; 12b; 12c; 12d), the blocking arrangement (42; 42a; 42b; 42c; 42d) comprising a blocking element (50; 50a; 50b; 50c; 50d) which is substantially stationary with regard to the housing (12; 12a; 12b; 12c; 12d) for wear adjustment and an adjusting element (56; 56a; 56b; 56c; 56d) which interacts with the blocking element (50; 50a; 50b; 50c; 50d) for the positional adjustment of a blocking section (62; 62a; 62b; 62c; 62d) of the blocking arrangement (42; 42a; 42b; 42c; 42d),
**characterized in that** the blocking element (50; 50a; 50b; 50c; 50d) is supported with regard to the housing arrangement (12; 12a; 12b; 12c; 12d) for the movement between an active position and an inactive position.

2. Pressure-plate assembly according to Claim 1, **characterized in that** the adjusting element (56; 56a; 56b; 56c; 56d) comprises an adjusting screw with a threaded region.

3. Pressure-plate assembly according to Claim 2, **characterized in that** the adjusting element (56; 56a) is supported on the blocking element (50; 50a) such that it can be moved for positional adjustment, and has the blocking section (62; 62a).

4. Pressure-plate assembly according to Claim 3, **characterized in that** the adjusting element (56; 56a) has a shank region (58; 58a) which is supported on the blocking element and a head region (60; 60a) which projects with regard to the shank region (58; 58a), for the provision of the blocking section (62; 62a).

5. Pressure-plate assembly according to Claim 4, **characterized in that** the head region (60) has the blocking section (62) on its side which faces away from the shank.

6. Pressure-plate assembly according to Claim 4, **characterized in that** the head region (60a) has the blocking section (62a) on its side which faces the shank.

7. Pressure-plate assembly according to Claim 2, **characterized in that** the adjusting element (56b; 56c; 56d) is supported with regard to the housing (12b; 12c; 12d) for the positional adjustment of the blocking section (62b; 62c; 62d) which is provided on the blocking element (50b; 50c; 50d), and acts on the blocking element (50b; 50c; 50d).

8. Pressure-plate assembly according to Claim 7, **characterized in that** the blocking element (50b; 50c; 50d) is flexible at least in regions.

9. Pressure-plate assembly according to Claim 7 or 8, **characterized in that** the adjusting element (56b; 56c; 56d) has a shank region (58b; 58c; 58d) which is supported with regard to the housing (12b; 12c; 12d).

10. Pressure-plate assembly according to Claim 9, **characterized in that** the adjusting element (56b) acts with the shank region (58b) on the blocking element (50b) for positional adjustment.

11. Pressure-plate assembly according to Claim 9, **characterized in that** the adjusting element (56c; 56d) has a head region (60c; 60d) which projects with regard to the shank region (58c; 58d), and acts with the head region (60c; 60d) on the blocking element (50c; 50d) for positional adjustment.

12. Pressure-plate assembly according to Claim 1, **characterized in that** the blocking element (50; 50a; 50b; 50c; 50d) is locked in its active position in the case of a housing arrangement (12; 12a; 12b; 12c; 12d) which is fixed on an abutment arrangement (16; 16a; 16c; 16c; 16d).

13. Pressure-plate assembly according to Claim 1 or 12, **characterized in that** the blocking element (50; 50a; 50b; 50c; 50d) can be displaced in the direction of the rotational axis (A) between its active position and its inactive position.

14. Pressure-plate assembly according to Claim 13, **characterized in that** at least one movement guiding element (52; 52a; 52b; 52c; 52d) is provided on the blocking element (50; 50a; 50b; 50c; 50d) and/or on the housing arrangement (12; 12a; 12b; 12c; 12d), in order to guide the blocking element (50; 50a; 50b; 50c; 50d) in the direction of the rotational axis (A) between its active position and its inactive position.

15. Pressure-plate assembly according to Claim 14, **characterized in that** the movement guiding element (52; 52a; 52b) has at least one guiding shank region (54; 54a; 54b) which is fixed on the blocking element (50; 50a; 50b) and is guided in an opening such that it can be moved axially with regard to the housing arrangement (12; 12a; 12b).

16. Pressure-plate assembly according to Claim 4 and Claim 14, **characterized in that** the adjusting element (56c; 56d) forms a movement guiding element (52c; 52d).

17. Pressure-plate assembly according to one of Claims 1 to 16, **characterized in that** the detection element (38; 38a; 38b; 38c; 38d) can be locked by a locking slide (46; 46a; 46b; 46c; 46d) in its wear-induced position with regard to the pressing plate (20; 20a; 20b; 20c; 20d), and **in that** the detection element (38; 38a; 38b; 38c; 38d) and/or the locking slide (46; 46a; 46b; 46c; 46d) hold/holds the adjusting element (32; 32a; 32b; 32c; 32d) in its wear-induced adjusting position with regard to the pressing plate (20; 20a; 20b; 20c; 20d).

18. Friction clutch, in particular for the drive train of a vehicle, comprising a pressure-plate assembly (10; 10a; 10b; 10c; 10d) according to one of the preceding claims, an abutment arrangement (16; 16a; 16b; 16c; 16d) which is connected fixedly to the housing arrangement (12; 12a; 12b; 12c; 12d), and a clutch-plate arrangement which is arranged between the pressing plate (20; 20a; 20b; 20c; 20d) and the abutment arrangement (16; 16a; 16b; 16c; 16d).

## Revendications

1. Module de plateau de pression pour un embrayage à friction, comprenant :
- un agencement de boîtier (12 ; 12a ; 12b ; 12c ; 12d) réalisé pour la connexion à un agencement de butée (16 ; 16a ; 16b ; 16c ; 16d),
- un plateau de pressage (20 ; 20a ; 20b ; 20c ; 20d) maintenu de manière mobile dans l'agencement de boîtier (12 ; 12a ; 12b ; 12c ; 12d) dans la direction d'un axe de rotation (A),
- un agencement de sollicitation par force (24 ; 24a ; 24b ; 24c ; 24d),
- un dispositif de rattrapage de l'usure (28 ; 28a ; 28b ; 28c ; 28d) dans la voie de transfert de force entre l'agencement de sollicitation par force (24 ; 24a ; 24b ; 24c ; 24d) et le plateau de pressage (20 ; 20a ; 20b ; 20c ; 20d), comprenant au moins un élément de rattrapage (32 ; 32a ; 32b ; 32c ; 32d) déplaçable dans la direction de rattrapage en vue du rattrapage de l'usure,
- au moins un agencement de détection d'usure (44 ; 44a ; 44b ; 44c ; 44d), comprenant un élément de détection (38 ; 38a ; 38b; 38c ; 38d) prévu sur le plateau de pressage (20 ; 20a ; 20b ; 20c ; 20d), qui, lors de l'apparition d'usure, vient en appui contre un agencement de blocage (42 ; 42a ; 42b ; 42c ; 42d) fixe par rapport à l'agencement de boîtier (12 ; 12a ; 12b ; 12c ; 12d), l'agencement de blocage (42 ; 42a ; 42b ; 42c ; 42d) comprenant un élément de blocage (50 ; 50a ; 50b ; 50c ; 50d) pour la détection de l'usure essentiellement fixe par rapport au boîtier (12 ; 12a ; 12b ; 12c ; 12d) et un élément d'ajustement (56 ; 56a ; 56b ; 56c ; 56d) coopérant avec l'élément de blocage (50 ; 50a ; 50b ; 50c ; 50d) pour l'ajustement de position d'une portion de blocage (62 ; 62a ; 62b ; 62c ; 62d) de l'agencement de blocage (42 ; 42a ; 42b ; 42c ; 42d),
**caractérisé en ce que** l'élément de blocage (50 ; 50a ; 50b ; 50c ; 50d) est porté par rapport à l'agencement de boîtier (12 ; 12a ; 12b ; 12c ; 12d) pour le déplacement entre une position active et une position inactive.

2. Module de plateau de pression selon la revendication 1,
**caractérisé en ce que** l'élément d'ajustement (56 ; 56a ; 56b ; 56c ; 56d) comprend une vis d'ajustement avec une région filetée.

3. Module de plateau de pression selon la revendication 2,
**caractérisé en ce que** l'élément d'ajustement (56 ; 56a) est porté de manière déplaçable sur l'élément de blocage (50 ; 50a) pour l'ajustement de position et présente la portion de blocage (62 ; 62a).

4. Module de plateau de pression selon la revendication 3,
**caractérisé en ce que** l'élément d'ajustement (56 ; 56a) présente une région de commutation (58 ; 58a) portée sur l'élément de blocage et une région de tête (60 ; 60a) faisant saillie par rapport à la région de commutation (58 ; 58a) pour fournir la portion de blocage (62 ; 62a).

5. Module de plateau de pression selon la revendication 4,
**caractérisé en ce que** la région de tête (60) présente la portion de blocage (62) sur son côté opposé à la tige.

6. Module de plateau de pression selon la revendication 4,
**caractérisé en ce que** la région de tête (60a) présente la portion de blocage (62a) sur son côté tourné vers la tige.

7. Module de plateau de pression selon la revendication 2,
**caractérisé en ce que** l'élément d'ajustement (56b ; 56c ; 56d) est porté par rapport au boîtier (12b ; 12c ; 12d) pour ajuster la position de la portion de blocage (62b ; 62c ; 62d) prévue sur l'élément de blocage (50b ; 50c ; 50d) et agit sur l'élément de blocage (50b ; 50c ; 50d).

8. Module de plateau de pression selon la revendication 7,
**caractérisé en ce que** l'élément de blocage (50b ; 50c ; 50d) est au moins en partie flexible.

9. Module de plateau de pression selon la revendication 7 ou 8,
**caractérisé en ce que** l'élément d'ajustement (56b ; 56c ; 56d) présente une région de tige (58b ; 58c ; 58d) portée par rapport au boîtier (12b ; 12c ; 12d).

10. Module de plateau de pression selon la revendication 9,
**caractérisé en ce que** l'élément d'ajustement (56b) agit avec la région de tige (58b) sur l'élément de blocage (50b) pour l'ajustement de position.

11. Module de plateau de pression selon la revendication 9,
**caractérisé en ce que** l'élément d'ajustement (56c ; 56d) présente une région de tête (60c ; 60d) faisant saillie par rapport à la région de tige (58c ; 58d) et agit avec la région de tête (60c ; 60d) sur l'élément de blocage (50c ; 50d).

12. Module de plateau de pression selon la revendication 1,
**caractérisé en ce que** l'élément de blocage (50 ; 50a ; 50b ; 50c ; 50d) est bloqué dans sa position active dans le cas d'un agencement de boîtier (12 ; 12a ; 12b ; 12c ; 12d) fixé sur un agencement de butée (16 ; 16a ; 16c ; 16c ; 16d).

13. Module de plateau de pression selon la revendication 1 ou 12,
**caractérisé en ce que** l'élément de blocage (50 ; 50a ; 50b ; 50c ; 50d) peut être déplacé entre sa position active et sa position inactive dans la direction de l'axe de rotation (A).

14. Module de plateau de pression selon la revendication 13,
**caractérisé en ce qu'**au moins un élément de guidage de mouvement (52 ; 52a ; 52b ; 52c ; 52d) pour le guidage de l'élément de blocage (50 ; 50a ; 50b ; 50c ; 50d) dans la direction de l'axe de rotation (A) entre sa position active et sa position inactive est prévu sur l'élément de blocage (50 ; 50a ; 50b ; 50c ; 50d) et/ou sur l'agencement de boîtier (12 ; 12a ; 12b ; 12c ; 12d).

15. Module de plateau de pression selon la revendication 14,
**caractérisé en ce que** l'élément de guidage de mouvement (52 ; 52a ; 52b) présente au moins une région de tige de guidage (54 ; 54a ; 54b) fixée sur l'élément de blocage (50 ; 50a ; 50b) et guidée de manière axialement déplaçable dans une ouverture par rapport à l'agencement de boîtier (12 ; 12a ; 12b).

16. Module de plateau de pression selon la revendication 4 et la revendication 14,
**caractérisé en ce que** l'élément d'ajustement (56c ; 56d) forme un élément de guidage de mouvement (52c ; 52d).

17. Module de plateau de pression selon l'une quelconque des revendications 1 à 16,
**caractérisé en ce que** l'élément de détection (38 ; 38a ; 38b; 38c ; 38d) peut être bloqué par un coulisseau de blocage (46 ; 46a ; 46b ; 46c ; 46d), dans sa position résultant de l'usure, par rapport au plateau de pressage (20 ; 20a ; 20b ; 20c ; 20d), et **en ce que** l'élément de détection (38 ; 38a ; 38b; 38c ; 38d) et/ou le coulisseau de blocage (46 ; 46a ; 46b ; 46c ; 46d) retiennent l'élément de rattrapage (32 ; 32a ; 32b ; 32c ; 32d) dans sa position de rattrapage résultant de l'usure par rapport au plateau de pressage (20 ; 20a ; 20b ; 20c ; 20d).

18. Embrayage à friction, en particulier pour la chaîne cinématique d'un véhicule, comprenant un module de plateau de pression (10 ; 10a ; 10b ; 10c ; 10d) selon l'une quelconque des revendications précédentes, un agencement de butée (16 ; 16a ; 16b ; 16c ; 16d) connecté fixement à l'agencement de boîtier (12 ; 12a ; 12b ; 12c ; 12d) ainsi qu'un agencement de disque d'embrayage disposé entre le plateau de pressage (20 ; 20a ; 20b ; 20c ; 20d) et l'agencement de butée (16 ; 16a ; 16b ; 16c ; 16d).
